# EUROPEAN PATENT SPECIFICATION

(11) **EP 2 863 095 B1**
(45) Date of publication and mention of the grant of the patent: **13.12.2017**
(21) Application number: 13188749.9
(22) Date of filing: 15.10.2013
(51) Int. Cl.: F16K 37/00

(54) **Control valve**
Steuerventil
Vanne de commande

(43) Date of publication of application: 22.04.2015
(73) Proprietor: Honeywell Technologies Sarl, 1180 Rolle (CH)
(72) Inventor: Fadrny, Petr, Blansko 67801 (CZ); Macourek, Karel, Bucovice 68501 (CZ)
(74) Representative: Sturm, Christoph

(56) References cited:
- EP-B1- 2 390 542
- US-A- 4 411 288
- US-A- 4 655 160
- US-A1- 2011 017 324

## Description

The invention relates to a control valve as defined in the preamble of claim 1.

In hydronic installations, for example in two-pipe heating systems, a hydronic medium tempered by a heat exchanger, for example by a heating boiler, is provided to heating or cooling devices, for example to heating radiators, through at least one supply pipe, whereby the hydronic medium is returned back from the heating or cooling devices to the heat exchanger by at least one return pipe. It is necessary to provide a defined flow within the hydronic installation and to provide a defined pressure differential between the supply pipe and the return pipe. This is a significant requirement for an efficient operation of such a hydronic installation. In order to provide a defined flow within such a hydronic installation, a so-called double regulating valve (DRV valve) is used and installed e.g. in the supply pipe of the hydronic installations. In order to provide a defined pressure differential between the supply pipe and the return pipe of the hydronic installation, a so-called differential pressure control valve (DPC valve) is used and installed between the supply pipe and the return pipe of the hydronic installations. With a differential pressure control valve it is possible to maintain a constant differential pressure between the supply pipe and the return pipe. This differential pressure is also called the set-point or presetting value of the differential pressure control valve.

EP 2 390 542 B1 discloses a control valve being a differential pressure control valve. The control valve comprises a valve housing and a valve plunger. The valve housing provides a valve inlet, a valve outlet and a valve seat, said valve inlet and valve outlet being connectable into a return pipe of a hydronic installation. The valve plunger is mounted to a first end of a valve stem and is acting together with the valve seat provided by the valve housing, whereby the differential pressure control valve is closed when the valve plunger is pressed against the valve seat, and whereby the differential pressure control valve is opened when the valve plunger is lifted up from the valve seat.

The control valve known from EP 2 390 542 B1 further comprises a diaphragm housing and diaphragm positioned inside said diaphragm housing. The diaphragm defines pressure chambers inside the diaphragm housing, namely a low pressure chamber being connectable through the valve inlet with the return pipe of the hydronic installation and a high pressure chamber being connectable to a supply pipe of the hydronic installation. The diaphragm is attached to the valve stem and acts on the valve stem depending on the differential pressure across the diaphragm.

The control valve known from EP 2 390 542 B1 further comprises a presetting unit for adjusting or setting the presetting value or set-point of the control valve, whereby the presetting unit disclosed in EP 2 390 542 B1 comprises a spring acting with a first end against the diaphragm housing and with a second end against a spring nut attached to the valve stem. The spring nut is moveable relative to the valve stem in order to compress or decompress the spring thereby defining the spring force acting on the diaphragm through the valve stem and thereby defining a presetting value or set-point.

The presetting value or set-point of such control valves is often adjusted by rotating a driver element through an actuator like e.g. a handwheel. Very often the presetting is achieved by a great amount of rotations of the actuator. For example, to achieve a change of the presetting value or set-point in range between 1 to 10, the actuator needs to be rotated more than 60 times. The relationship between change of the set-point and the number of actuator rotations needed to provide that change is also called transmission ratio. It is important to know the actual value of the set-point of a control valve. The presetting value or set-point of a control valve needs to be externally indicated. Current solutions for indicating the presetting value or set-point of the control valve are often indicating the presetting value or set-point by a linear indicator moving in an axial direction of the driver element or actuator, which is quite space demanding and not clearly readable. Other solutions for indicating the presetting value or set-point of the control valve are not able to cover a high transmission ratio between the change of the set-point and the number of actuator rotations needed to provide that change. Therefore, in the prior art conversion tables to determine the actual value of the set point based on revolutions of the driver element or actuator are required.

WO 03/044402 A1, US 2011/0017324 A1 and GB 2 283 301 A disclose valves with means for indicating the position of the valve body relative to the valve seat, respectively. Against this background, a novel control valve according to claim 1 is provided. The presetting unit of the control valve comprises at least a housing element, a driver element, a pinion element and an indicator element. The housing element of the presetting unit is fixedly attached to the valve housing and houses said driver element, said pinion element and said indicator element. The driver element and the indicator element are both rotatable around a rotation axis relative to the housing element, wherein the rotation of the driver element causes an adjustment of the presetting value for the control valve. The pinion element is guided by the driver element in such a way that the pinion element follows the rotation of the driver element. The pinion element comprises an external toothing acting together with a first toothing of the housing element and acting together with a second toothing of the indicator element, wherein the number of teeth of the first toothing of the housing element is different from the number of teeth of the second toothing of the indicator element thereby causing a relative movement between the indicator element and the housing element upon rotation of the driver element. The position of the indicator element relative to the housing element indicates the presetting value of the control valve.

The invention uses a simple and reliable gearbox for indicating the presetting value or set-point of a control valve. The presetting value or set-point is indicated by a slowly moving indicator element. The main advantages of the invention are: The presetting unit has a high transmission ratio which can be adjusted by proper teeth amount selection of the first toothing of the housing element and of the second toothing of the indicator element. The rotation direction of the indicator element relative to the housing element can be also adjusted by the proper teeth amount selection. The invention provides an easily readable indication of the presetting value or set-point which can directly show the actual value of the presetting on much more detailed scale than known solutions. The solution is not space demanding and does not require extending the size of the valve body in axial direction. The invention is universal and could be adapted in a wide range control valves, but it is most suitable for the presetting of control valves which are characterized by a high transmission ration and which therefore require high number of rotations of the driver element or actuator to change the presetting value or set-point.

Preferably, the driver element and the indicator element are both rotatable around a common rotation axis relative to the housing element. Preferably, the pinion element is rotatable around a rotation axis running parallel to the common rotation axis of the driver element and the indicator element. This design is simple and reliable.

The first toothing of the housing element and the second toothing of the indicator element are in direction of the rotation axis of the driver element and indicator element stacked above each other, whereby the toothing of the pinion element engages with both the first toothing of the housing element and the second toothing of the indicator element. This design is simple and reliable.

The indicator element is concentrically positioned around the driver element. Preferably, the pinion element is positioned within a recess of the driver element. This design is simple and reliable.

Preferred developments of the invention are provided by the dependent claims and the description which follows.

Exemplary embodiments are explained in more detail on the basis of the drawing, in which:
- Figure 1: shows a perspective view of a control valve according to the invention comprising a presetting unit;
- Figure 2: shows an exploded view of the presetting unit of the control valve according to the invention;
- Figure 3: shows another exploded view of the presetting unit of the control valve according to the invention;
- Figure 4: shows a cross section of the presetting unit of the control valve according to the invention;

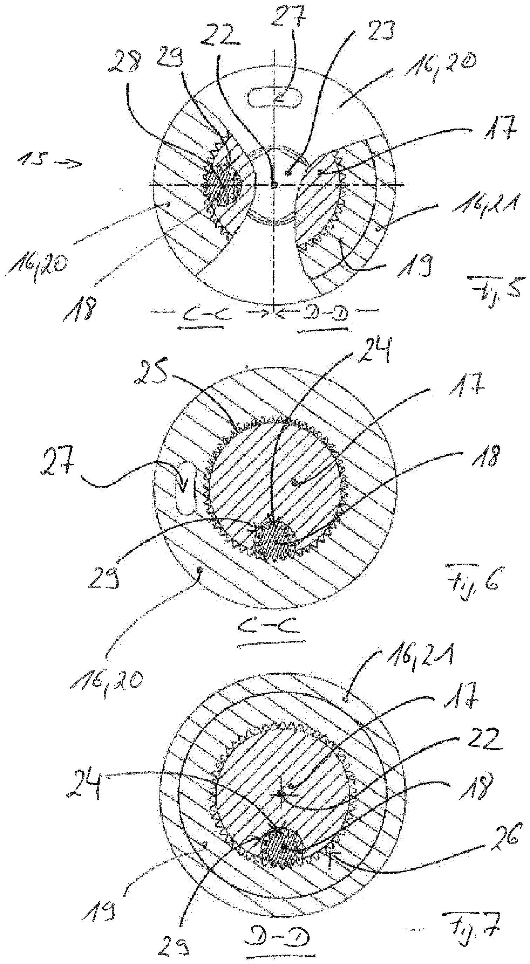

- Figure 5: shows a top view of the presetting unit of the control valve with a partially broken upper housing section.;
- Figure 6: shows the cross section C-C of Figure 4; and
- Figure 7: shows the cross section D-D of Figure 4.

The present invention relates to a control valve, especially to a differential pressure control valve 10. Such a differential pressure control valve 10 is used e.g. in hydronic heating or cooling installations to provide a defined pressure differential between a supply pipe and a return pipe of the hydronic heating or cooling installation.

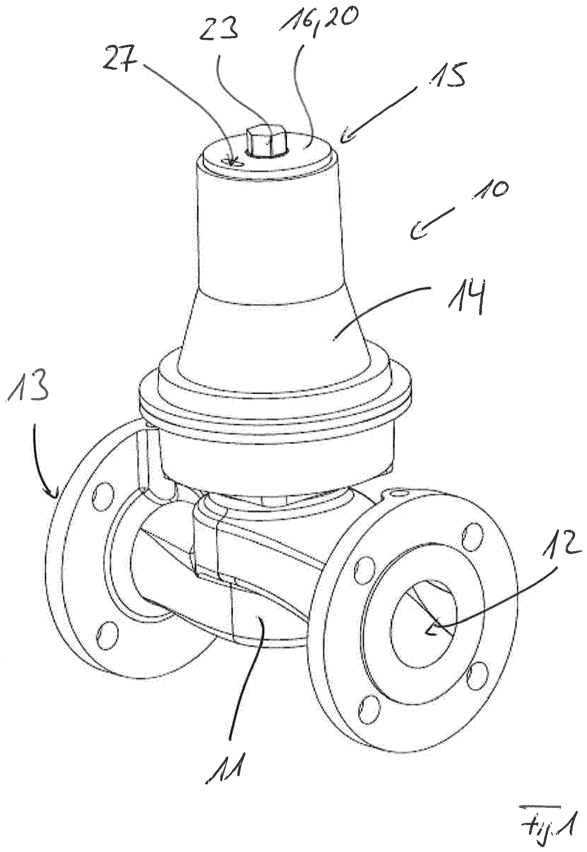

Figure 1 shows a preferred embodiment of a control valve 10.

The control valve 10 comprises a valve housing 11. The valve housing 11 comprises a valve inlet 13, a valve outlet 12. Said valve inlet 13 and valve outlet 12 of the valve housing 11 are connectable into a return pipe of a hydronic installation.

The valve housing 11 provides a valve seat (not shown). A valve plunger (not shown) acts together with the valve seat. The control valve 10 is closed when the valve plunger is pressed against the valve seat. The control valve 10 is opened when the valve plunger is lifted up from the valve seat. The valve plunger comprises a plunger body (not shown) carrying sealing elements (not shown). When the control valve is closed one of said sealing elements of the valve plunger is pressed against the valve seat. The valve plunger is mounted to a valve stem (not shown).

The valve housing 11 of the control valve 10 comprises a diaphragm housing 14 and diaphragm (not shown) positioned inside said diaphragm housing 14. The diaphragm is attached to the valve stem and defines pressure chambers inside the diaphragm housing 14. The pressure differential between pressure chambers inside the diaphragm housing 14 defines a force which acts on the diaphragm and through the diaphragm on the valve stem and thereby on the valve plunger. The force depending on the pressure differential between the pressure chambers tends to press the valve plunger against the valve seat and tends to close the control valve 10.

The above basic functionality of such a control valve is known from EP 2 390 542 B1.

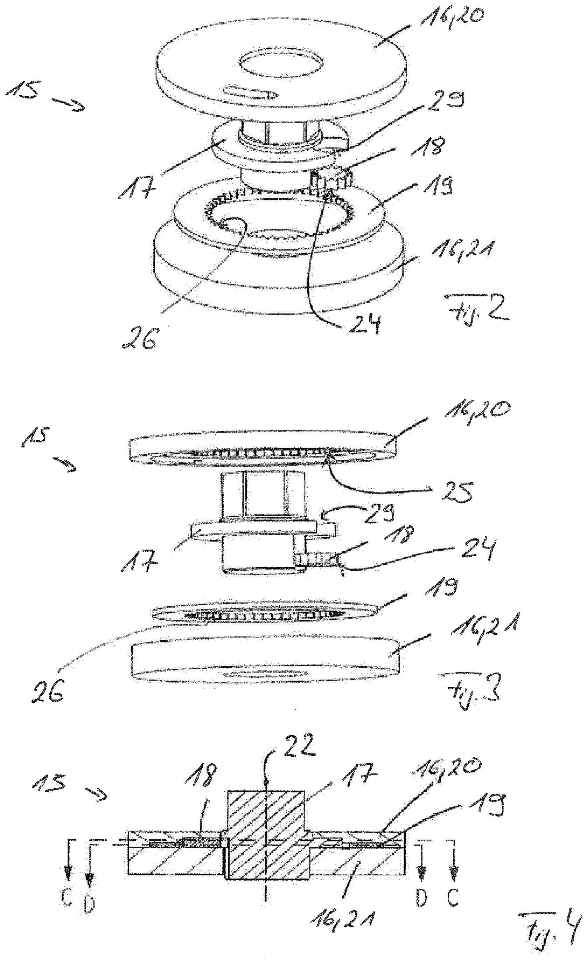

The control valve 10 further comprises a presetting unit 15. The presetting unit 15 is used to adjust a presetting value of the control valve 10. The presetting value of the control valve 10 is also called set-point of the control valve 10. Figures 2 to 4 show details of the presetting unit 15.

The presetting unit 15 of the control valve 10 according to the present application comprises at least a housing element 16, a driver element 17, a pinion element 18 and an indicator element 19.

The housing element 16 comprises an upper housing section 20 and a lower housing section 21. Both housing sections 20, 21 of the housing element 16 are static parts of the presetting unit 15 and both housing sections 20, 21 are fixedly attached to the valve housing 11, namely to the diaphragm housing 14. The housing element 16 houses said driver element 17, said pinion element 18 and said indicator element 19.

The driver element 17 and the indicator element 19 are both non-static parts of the presetting unit 15 and the same are rotatable around a rotation axis 22 relative to the housing element 16. According to Figure 1, a presetting nut 23 is attached to the driver element 17 so that the driver element 17 can be rotated by the presetting nut 23. The rotation of driver element 17 causes an adjustment of the presetting value or set point of the control valve 10.

The pinion element 18 is also a non-static part of the presetting unit 15. The pinion element 18 is guided by the driver element 17 in such a way that the pinion element 18 follows the rotation of the driver element 17.

The pinion element 18 comprises an external toothing 24 acting together with a first internal toothing 25 of the housing element 16, namely of the upper housing section 20, and further acting together with a second internal toothing 26 of the indicator element 19.

The number of teeth of the first internal toothing 25 of the upper housing section 20 is different from the number of teeth of the second internal toothing 26 of the indicator element 19 thereby causing a relative movement between the indicator element 19 and the housing element 16 upon rotation of the driver element 17.

The indicator element 19 carries a scale. The position of the indicator element 19 relative to the upper housing section 20 of the housing element 16 indicates the actual value of presetting value of the control valve 10.

The actual value of presetting value of the control valve 10 is visible through a recess 27 in the upper housing section 20 of the housing element 16.

The section of the scale carried by the indicator element 19 being visible through the recess 27 in the upper housing section 20 of the housing element 16 depends on the position of the indicator element 19 relative to the housing element 16 and indicates the set-point of the control valve 10.

The driver element 17 and the indicator element 19 are both rotatable around a common rotation axis 22 relative to the housing element 16. The indicator element 19 is concentrically positioned around the driver element 17.

The first internal toothing 25 of the upper housing section 20 of the housing element 16 and the second internal toothing 26 of the indicator element 19 are in direction of the common rotation axis 22 of the driver element 17 and the indicator element 19 stacked above each other. The external toothing 24 of the pinion element 18 engages with both the first internal toothing 25 of the housing element 16 and the second internal toothing 26 of the indicator element 19.

The pinion element 18 is guided by the driver element 17 in such a way that the pinion element 18 follows the rotation of the driver element 17 and that the pinion element 18 rotates around a rotation axis 28 running parallel to the common rotation axis 22 of the driver element 17 and the indicator element 19. It is also possible to use a pinion element 18 having a rotation axis running perpendicular to the common rotation axis 22 of the driver element 17 and the indicator element 19.

The rotation of the pinion element 18 around the rotation axis 28 is caused on the one hand by the rotation of the driver element 17 and on the other hand by the external toothing 24 of the pinion element 18 engaging with the first internal toothing 25 of the static upper housing section 20.

As mentioned above, the external toothing 24 of the pinion element 18 is also engaging with the second internal toothing 26 of the non-static indicator element 19.

Due to the feature that the number of teeth of the first internal toothing 25 of the upper housing section 20 is different from the number of teeth of the second internal toothing 26 of the indicator element 19, the rotation of the driver element 17 and thereby the rotation of pinion element 18 causes a relative movement of the indicator element 19 relative to the housing element 16.

If the number of teeth of the first internal toothing 25 of the upper housing section 20 is larger than the number of teeth of the second internal toothing 26 of the indicator element 19, the indicator element 19 and the driver element 17 roate in the same direction. If the number of teeth of the first internal toothing 25 of the upper housing section 20 is smaller than the number of teeth of the second internal toothing 26 of the indicator element 19, the indicator element 19 and the driver element 17 rotate in opposite directions.

The first toothing 25 of the housing element 16 as well as the second toothing 26 of the indicator element 19 can also be provided by external toothings. In this case, the pinion element 18 would be running on the external side of the housing element 16 and indicator element 19. The pinion element 18 needs to make use of an external toothing.

Preferably, the amount of the difference between number of teeth of the first toothing 25 of the upper housing section 20 and the number of teeth of the second toothing 26 of the indicator element 19 is small. This results into a small relative movement of the indicator element 19 relative to the housing element 16 upon each full rotation of the driver element.

In the shown embodiment the pinion element 18 is positioned within a recess 29 of the driver element 17. It is also possible that the pinion element 18 is positioned offset to the driver element 17 and a shaft of pinion element 18 is coupled to the driver element 17. It is important that the pinion element 18 is guided by the driver element 17 in such a way that the pinion element 18 follows the rotation of the driver element 17. If the opinion element 18 is positioned within a recess 29 of the driver element 17, they design is very simple and compact.

### List of reference signs

- 10: control valve
- 11: valve housing
- 12: valve outlet
- 13: valve inlet
- 14: diaphragm housing
- 15: presetting unit
- 16: housing element
- 17: driver element
- 18: pinion element
- 19: indicator element
- 20: upper housing section
- 21: lower housing section
- 22: rotation axis
- 23: presetting nut
- 24: external toothing
- 25: first toothing
- 26: second toothing
- 27: recess
- 28: rotation axis
- 29: recess

## Claims

1. Control valve (10) for hydronic installations, comprising:
a valve housing (11) providing a valve inlet (13) and a valve outlet (12), said valve inlet (13) and valve outlet (12) being connectable into a pipe of the hydronic installation;
a valve plunger acting together with a valve seat, whereby the valve is closed when the valve plunger is pressed against the valve seat, and whereby the valve is opened when the valve plunger is lifted up from the valve seat;
a presetting unit (15) for adjusting a presetting value of the valve;
**characterized in that**
said presetting unit (15) comprises at least a housing element (16), a driver element (17), a pinion element (18) and an indicator element (19), wherein
the housing element (16) of the presetting unit (15) is fixedly attached to the valve housing (11) and houses said driver element (17), said pinion element (18) and said indicator element (19);
the driver element (17) and the indicator element (19) are both rotatable around a rotation axis (22) relative to the housing element (16), wherein the rotation of the driver element (17) causes an adjustment of the presetting value of the control valve;
the pinion element (18) is guided by the driver element (17) in such a way that the pinion element (18) follows the rotation of the driver element (17);
the pinion element (18) comprises an external toothing (24) acting together with a first toothing (25) of the housing element (16) and with a second toothing (26) of the indicator element (19), wherein the number of teeth of the first toothing (25) is different from the number of teeth of the second toothing (26) thereby causing a relative movement between the indicator element (19) and to the housing element (16) upon rotation of the driver element (17), and wherein the position of the indicator element (19) relative to the housing element (16) indicates the presetting value of the control valve.

2. Control valve as claimed in claim 1, **characterized in that** the driver element (17) and the indicator element (19) are both rotatable around a common rotation axis (22) relative to the housing element (16).

3. Control valve as claimed in claim 1 or 2, **characterized in that** the indicator element (19) is concentrically positioned around the driver element (17).

4. Control valve as claimed in one of claims 1 to 3, **characterized in that** the pinion element (18) is positioned within a recess (29) of the driver element (17).

5. Control valve as claimed in one of claims 1 to 3, **characterized in that** the pinion element (18) is positioned offset to the driver element (17) and a shaft of the pinion element (18) is coupled to the driver element (17).

6. Control valve as claimed in one of claims 1 to 5, **characterized in that** the first toothing (25) of the housing element (16) and the second toothing (26) of the indicator element (19) are in direction of the rotation axis (22) of the driver element (17) and the indicator element (19) stacked above each other, whereby the toothing (24) of the pinion element (18) engages with both the first toothing (25) of the housing element (16) and the second toothing (26) of the indicator element (19).

7. Control valve as claimed in one of claims 1 to 6, **characterized in that** the indicator element (19) carries a scale being visible through a recess (27) in the housing element (16), wherein the section of the scale being visible through the recess (27) depends on the position of the indicator element (19) relative to the housing element (16) and thereby indicates the presetting value of the control valve.

8. Control valve as claimed in one of claims 1 to 7, **characterized in that** the pinion element (18) rotates around a rotation axis (28) running parallel to the rotation axis (22) of the driver element (17) and the indicator element (19).

9. Control valve as claimed in one of claims 1 to 7, **characterized in that** the pinion element (18) rotates around a rotation axis running perpendicular to the rotation axis (22) of the driver element (17) and the indicator element (19).

10. Control valve as claimed in one of claims 1 to 9, **characterized in that** the same is a differential pressure control valve.

## Patentansprüche

1. Regelventil (10) für hydronische Anlagen, umfassend:
ein Ventilgehäuse (11), das einen Ventileinlass (13) und einen Ventilauslass (12) bereitstellt, wobei der Ventileinlass (13) und der Ventilauslass (12) mit einem Rohr der hydronischen Anlage verbunden werden können,
einen Ventilstößel, der mit einem Ventilsitz zusammenwirkt, wobei das Ventil geschlossen wird, wenn der Ventilstößel gegen den Ventilsitz gedrückt wird, und wobei das Ventil geöffnet wird, wenn der Ventilstößel von dem Ventilsitz abgehoben wird,
eine Vorgabeeinheit (15) zum Einstellen eines Vorgabewerts des Ventils,
**dadurch gekennzeichnet, dass**
die Vorgabeeinheit (15) wenigstens ein Gehäuseelement (16), ein Antriebselement (17), ein Ritzelelement (18) und ein Anzeigeelement (19) umfasst, wobei
das Gehäuseelement (16) der Vorgabeeinheit (15) fest an dem Ventilgehäuse (11) angebracht ist und das Antriebselement (17), das Ritzelelement (18) und das Anzeigeelement (19) beherbergt,
das Antriebselement (17) und das Anzeigeelement (19) beide um eine Drehachse (22) relativ zu dem Gehäuseelement (16) drehbar sind, wobei die Drehung des Antriebselements (17) eine Einstellung des Vorgabewerts des Regelventils bewirkt,
das Ritzelelement (18) durch das Antriebselement (17) auf eine solche Weise geführt wird, dass das Ritzelelement (18) der Drehung des Antriebselements (17) folgt,
das Ritzelelement (18) eine äußere Verzahnung (24) umfasst, die mit einer ersten Verzahnung (25) des Gehäuseelements (16) und mit einer zweiten Verzahnung (26) des Anzeigeelements (19) zusammenwirkt, wobei sich die Anzahl der Zähne der ersten Verzahnung (25) von der Anzahl der Zähne der zweiten Verzahnung (26) unterscheidet und dadurch bei einer Drehung des Antriebselements (17) eine relative Bewegung zwischen dem Anzeigeelement (19) und dem Gehäuseelement (16) bewirkt wird, und wobei die Stellung des Anzeigeelements (19) relativ zu dem Gehäuseelement (16) den Vorgabewert des Regelventils anzeigt.

2. Regelventil nach Anspruch 1, **dadurch gekennzeichnet, dass** das Antriebselement (17) und das Anzeigeelement (19) beide um eine gemeinsame Drehachse (22) relativ zu dem Gehäuseelement (16) drehbar sind.

3. Regelventil nach Anspruch 1 oder 2, **dadurch gekennzeichnet, dass** das Anzeigeelement (19) konzentrisch um das Antriebselement (17) positioniert ist.

4. Regelventil nach einem der Ansprüche 1 bis 3, **dadurch gekennzeichnet, dass** das Ritzelelement (18) in einer Ausnehmung (29) des Antriebselements (17) positioniert ist.

5. Regelventil nach einem der Ansprüche 1 bis 3, **dadurch gekennzeichnet, dass** das Ritzelelement (18) versetzt zu dem Antriebselement (17) positioniert ist und eine Welle des Ritzelements (18) an das Antriebselement (17) gekoppelt ist.

6. Regelventil nach einem der Ansprüche 1 bis 5, **dadurch gekennzeichnet, dass** die erste Verzahnung (25) des Gehäuseelements (16) und die zweite Verzahnung (26) des Anzeigeelements (19) in Richtung der Drehachse (22) des Antriebselements (17) und des Anzeigeelements (19) übereinander angeordnet sind, wodurch die Verzahnung (24) des Ritzelelements (18) in Eingriff sowohl mit der ersten Verzahnung (25) des Gehäuseelements (16) als auch mit der zweiten Verzahnung (26) des Anzeigeelements (19) steht.

7. Regelventil nach einem der Ansprüche 1 bis 6, **dadurch gekennzeichnet, dass** das Anzeigeelement (19) eine Skala trägt, die durch eine Ausnehmung (27) in dem Gehäuseelement (16) sichtbar ist, wobei der Abschnitt der Skala, der durch die Ausnehmung (27) sichtbar ist, von der Stellung des Anzeigeelements (19) relativ zu dem Gehäuseelement (16) abhängt und dadurch den Vorgabewert des Regelventils anzeigt.

8. Regelventil nach einem der Ansprüche 1 bis 7, **dadurch gekennzeichnet, dass** sich das Ritzelelement (18) um eine Drehachse (28) dreht, die parallel zu der Drehachse (22) des Antriebselements (17) und des Anzeigeelements (19) verläuft.

9. Regelventil nach einem der Ansprüche 1 bis 7, **dadurch gekennzeichnet, dass** sich das Ritzelelement (18) um eine Drehachse dreht, die rechtwinklig zu der Drehachse (22) des Antriebselements (17) und des Anzeigeelements (19) verläuft.

10. Regelventil nach einem der Ansprüche 1 bis 9, **dadurch gekennzeichnet, dass** es sich dabei um ein Differenzdruckregelventil handelt.

## Revendications

1. Vanne de commande (10) pour installations hydroniques, comprenant :
un logement (11) de vanne offrant une entrée (13) de vanne et une sortie (12) de vanne, lesdites entrée (13) de vanne et sortie (12) de vanne pouvant être raccordées dans un tuyau de l'installation hydronique ;
un piston de vanne agissant en même temps qu'un siège de vanne, moyennant quoi la vanne est fermée quand le piston de vanne est appuyé contre le siège de vanne, et moyennant quoi la vanne est ouverte quand le piston de vanne est soulevé du siège de vanne ;
une unité (15) de préréglage pour régler une valeur de préréglage de la vanne,
**caractérisée en ce que** ladite unité (15) de préréglage comprend au moins un élément de logement (16), un élément d'entraînement (17), un élément de pignon (18) et un élément indicateur (19), dans laquelle :
l'élément de logement (16) de l'unité (15) de préréglage est fixé à demeure au logement (11) de vanne et abrite ledit élément d'entraînement (17), ledit élément de pignon (18) et ledit élément indicateur (19) ;
l'élément d'entraînement (17) et l'élément indicateur (19) sont tous les deux rotatifs autour d'un axe de rotation (22) par rapport à l'élément de logement (16), la rotation de l'élément d'entraînement (17) provoquant un réglage de la valeur de préréglage de la vanne de commande ;
l'élément de pignon (18) est guidé par l'élément d'entraînement (17) de telle façon que l'élément de pignon (18) suit la rotation de l'élément d'entraînement (17) ;
l'élément de pignon (18) comprend une denture externe (24) agissant conjointement avec une première denture (25) de l'élément de logement (16) et avec une deuxième denture (26) de l'élément indicateur (19), dans laquelle le nombre de dents de la première denture (25) est différent du nombre de dents de la deuxième denture (26), entraînant de ce fait un mouvement relatif entre l'élément indicateur (19) et l'élément de logement (16) lorsqu'on fait tourner l'élément d'entraînement (17), et dans laquelle la position de l'élément indicateur (19) par rapport à l'élément de logement (16) indique la valeur de préréglage de la vanne de commande.

2. Vanne de commande selon la revendication 1, **caractérisée en ce que** l'élément d'entraînement (17) et l'élément indicateur (19) sont tous les deux rotatifs autour d'un axe de rotation (22) commun par rapport à l'élément de logement (16).

3. Vanne de commande selon la revendication 1 ou 2, **caractérisée en ce que** l'élément indicateur (19) est en position concentrique autour de l'élément d'entraînement (17).

4. Vanne de commande selon l'une quelconque des revendications 1 à 3, **caractérisée en ce que** l'élément de pignon (18) est placé dans un évidement (29) de l'élément d'entraînement (17).

5. Vanne de commande selon l'une quelconque des revendications 1 à 3, **caractérisée en ce que** l'élément de pignon (18) est en position décalée par rapport à l'élément d'entraînement (17) et un axe de l'élément de pignon (18) est accouplé à l'élément d'entraînement (17).

6. Vanne de commande selon l'une quelconque des revendications 1 à 5, **caractérisée en ce que** la première denture (25) de l'élément de logement (16) et la deuxième denture (26) de l'élément indicateur (19) sont dans la direction de l'axe de rotation (22) de l'élément d'entraînement (17) et de l'élément indicateur (19) empilés l'un au-dessus de l'autre, moyennant quoi la denture (24) de l'élément de pignon (18) s'engrène à la fois avec la première denture (25) de l'élément de logement (16) et avec la deuxième denture (26) de l'élément indicateur (19).

7. Vanne de commande selon l'une quelconque des revendications 1 à 6, **caractérisée en ce que** l'élément indicateur (19) porte une échelle qui est visible à travers un évidement (27) dans l'élément de logement (16), dans laquelle la section de l'échelle qui est visible à travers l'évidement (27) dépend de la position de l'élément indicateur (19) par rapport à l'élément de logement (16) et, de ce fait, indique la valeur de préréglage de la vanne de commande.

8. Vanne de commande selon l'une quelconque des revendications 1 à 7, **caractérisée en ce que** l'élément de pignon (18) tourne autour d'un axe de rotation (28) parallèle à l'axe de rotation (22) de l'élément d'entraînement (17) et de l'élément indicateur (19).

9. Vanne de commande selon l'une quelconque des revendications 1 à 7, **caractérisée en ce que** l'élément de pignon (18) tourne autour d'un axe de rotation perpendiculaire à l'axe de rotation (22) de l'élément d'entraînement (17) et de l'élément indicateur (19).

10. Vanne de commande selon l'une quelconque des revendications 1 à 9, **caractérisée en ce que** celle-ci est une vanne de commande de pression différentielle.
